# EUROPEAN PATENT SPECIFICATION

(11) **EP 3 199 481 B1**
(45) Date of publication and mention of the grant of the patent: **12.12.2018**
(21) Application number: 17153569.3
(22) Date of filing: 27.01.2017
(51) Int. Cl.: B65H 49/32, B65H 57/28, B65H 67/02, B63B 35/04, H02G 1/10

(54) **APPARATUS FOR UNWINDING CABLES ON SEABEDS AND METHOD OF OPERATION OF AN APPARATUS FOR UNWINDING CABLES ON SEABEDS**
VORRICHTUNG ZUR ABWICKLUNG VON KABELN AUF MEERESBÖDEN UND VERFAHREN ZUM BETRIEB EINER VORRICHTUNG ZUR ABWICKLUNG VON KABELN AUF MEERESBÖDEN
APPAREIL DE DÉROULEMENT DE CÂBLES SUR LES FONDS MARINS ET PROCÉDÉ DE FONCTIONNEMENT D'UN APPAREIL DE DÉROULEMENT DE CÂBLES SUR LES FONDS MARINS

(30) Priority: 29.01.2016 IT UB20160505
(43) Date of publication of application: 02.08.2017
(73) Proprietor: Innovo Engineering and Construction LTD, Aberdeen AB10 1UQ (GB)
(72) Inventor: MALAGODI, Stefano, I-25019 Sirmione (BS) (IT); TIBERIO, Andrea, I-35020 Albignasego (PD) (IT)
(74) Representative: Gallo, Luca

(56) References cited:
- EP-A1- 2 743 560
- WO-A1-2009/077711
- WO-A1-2011/105894
- WO-A1-2012/091556
- GB-A- 2 046 207
- US-A- 4 687 376

## Description

### Field of application

The present invention regards an apparatus for unwinding cables on seabeds and a method of operation of an apparatus for unwinding cables on seabeds.

The present apparatus and the method fall within the industrial field of the production of offshore equipment and are intended to be used in the field of laying cables on beds of seas, lakes, basins, etc. More in detail, the apparatus that is the object of the present invention is intended to be mounted on ships in order to unwind reels of cables on a seabed, such as in particular flexible cables (for example an energy transmission cable, a data transmission signal cable, etc.) or cables made of yielded steel employed for example for injecting compressed air or water in an oil well.

In particular, the reels of cables intended to be unwound by means of the present apparatus and method have diameter of about 6 to 24 meters and weight of about 200 to 2500 tons.

### State of the art

As is known, the apparatuses for unwinding cables on seabeds, such as the apparatuses of known type described in the patents EP 2743560 and GB 2046207, conventionally comprise a support structure formed by a base (mounted for example on the deck of a ship) and by two towers which rise upward for several meters, parallel to each other, starting from the base and which together support a reel of a cable to be laid on a seabed.

More in detail, each tower is preferably obtained by means of two columns that are parallel to and counter-facing each other, between which a hub-holder group that rotatably supports the reel is slidably engaged in opposite guides. The reel is usually constituted by a drum around which the cable is wound, which is rotated by means of the actuation of motor means directly mounted on the hub-holder group of the apparatus.

The apparatus also comprises at least two vertical hydraulic pistons, each of which mounted between the two columns of each tower for the lifting and lowering of the reel between a lowered loading position and a raised work position.

Two horizontal hydraulic pistons are also provided for, mounted on the base in order to move the two towers towards or away from each other along rails, in order to allow the hub-holder group respectively to be engaged with the drum of the reel or be detached from the drum itself.

The apparatuses of known type for unwinding cables on seabeds also comprise a further laying tower, which is laid on the deck of a ship in front of the reel supported by the two aforesaid towers at several meters distance from the reel itself. At the top of the laying tower, a transmission pulley is rotatably mounted which abuttingly receives the cable that comes from the reel, in a manner such that the cable bends around the transmission pulley and vertically descends in order to enter into a space made on the deck of the ship at the feet of the laying tower, so as to bring the cable itself onto the seabed.

In particular, the transmission pulley is perimetrically provided with an annular seat (delimited between two projecting side walls), within which the cable section is inserted that lies on the transmission pulley itself, in a manner so as to guide the movement of the cable around the axis of the transmission pulley.

The apparatus also comprises tensioning means, mounted on the laying tower and acting on the cable in order to keep it constantly under tension during the unwinding of the cable itself.

As is known, cable reels have very high weight, typically many hundreds of tons, and can have very large size, for example with a radius between about 6 and 11 meters (and even up to 24 meters) and an axial length of about 5-6 meters.

The drum of the reel (for example made of steel) has cylindrical form and is horizontally extended between two ends thereof, carrying the cable to be laid externally mounted thereon.

The cable is wound around the drum of the reel, forming multiple rows of coils arranged on top of each other. More in detail, each row of coils is composed of multiple coils wound around the axis of the drum and arranged next to each other from one end of the drum itself to the other. In addition, the rows of coils are arranged wound around each other, starting from an internal coil, wound around the surface of the drum of the reel, to an external row from which the cable exits from the reel in order to be brought towards the transmission pulley mounted on the laying tower.

In operation, the reel is driven by the motor means to rotate, in order to unwind the cable that consequently slides towards the transmission pulley according to a laying direction orthogonal to the hub rotation axis. The cable, then, descends vertically downward from the transmission pulley in order to enter within the space of the ship deck.

More in detail, following the rotation of the reel, the coils of the cable are unwound from each row, one after the other starting from the coil arranged at one of the ends of the drum of the reel up to the other end of the drum itself.

Since, as stated, the drum of the reel has several meters length (e.g. 5-6 meters), while the coils placed at the ends of the drum are being unwound, the section of cable that is extended from the reel to the transmission pulley forms a relatively high angle with respect to the aforesaid laying direction (orthogonal to the hub rotation axis).

This causes the coil being unwound to overlap on the subsequent coil, in particular being inserted between the latter coil and the further subsequent coil of the coil row of the reel, generating entanglements that easily cause the jamming of the unwinding movement, variations of the cable tensioning, as well as damage of the cable such as crushing, yielding, variation of the curvature radius angle of the cable, etc.

In addition, when the cable enters with a high tilt angle (with respect to the laying direction) within the annular seat of the pulley, the cable tends to rub against the perimeter edge of the side walls projecting from the seat itself, causing further risk of damage of the cable itself

The aforesaid condition with high tilt angle is particular disadvantageous in the laying operations of steel cables, since such steel cables are more easily subjected to being damaged following rubbing and crushing.

In addition, the verification of the aforesaid jamming and damage conditions requires interrupting the operations of laying and executing repair operations that are particularly long and difficult, since it is necessary to operate on the cable at high heights from the ship deck. More in detail, it is necessary to interrupt the movement of the reel, arrange suitable support frameworks in order to sustain the cable at the damaged parts, cut the cable at such damaged parts and then weld the cable itself, and operation must also occur at over ten meters height from the ship deck. Such operations require interrupting the operations of laying the cable, even for a week, with consequent delays in the completion of the work and considerable additional expenses (even hundreds of thousands of dollars) to be sustained, for example for the maintenance of the ship on which the apparatus is mounted.

The international patent WO 2009/077711 describes an apparatus for unwinding cables on seabeds, which comprises a straightener group intended to receive the cable unwound from the reel, which is movable to slide parallel to its rotation axis in order to align the unwound cable with the aforesaid straightener group. The apparatus described in WO 2009/077711 does not allow ensuring optimal reliability conditions during the unwinding of the cable on the seabed.

### Presentation of the invention

The problem underlying the present invention is therefore that of overcoming the drawbacks of the abovementioned prior art, by providing an apparatus for unwinding cables on seabeds and a method for operating said apparatus, which are entirely reliable in operation and, in particular, which allow unwinding the cables without the risk of damaging the latter.

A further object of the present invention is to provide an apparatus for unwinding cables on seabeds and a method for operating said apparatus, which allow executing the laying operations in relatively quick times and with relatively limited costs.

A further object of the present invention is to provide an apparatus for unwinding cables on seabeds, which occupies relatively limited spaces.

A further object of the present invention is to provide an apparatus for unwinding cables on seabeds, which is structurally simple and inexpensive to make.

### Brief description of the drawings

The technical characteristics of the invention, according to the aforesaid objects, can be clearly seen in the contents of the below-reported claims, and the advantages thereof will be clearer in the following detailed description, made with reference to the enclosed drawings, which represent a merely exemplifying and non-limiting embodiment of the invention, in which:
- figure 1 shows a top plan view of the apparatus, object of the present invention;
- figure 2 shows a top plan view of the apparatus illustrated in figure 1, in which the movable towers of the apparatus are arranged in a different operating position;
- figure 3 shows a perspective view of a detail of the present apparatus, relative to the movable towers and to moving means for such movable towers;
- figure 4 shows a plan view of the apparatus illustrated in figure 3;
- figure 5 shows a side view of the apparatus illustrated in figure 3;
- figure 6 shows a front view of the apparatus illustrated in figure 3;
- figures 7A and 7B illustrated two plan views of the moving means of the present apparatus arranged in two corresponding operating positions;
- figure 8 shows a front view of a detail of the apparatus relative to the two movable towers with a reel of the cable to be unwound arranged between the movable towers themselves;
- figure 9 shows a sectional view of the reel illustrated in figure 8;
- figure 10 shows a perspective view of one of the movable towers of the apparatus with some parts removed in order to better illustrated other parts;
- figure 11 shows a detail of the present apparatus relative to transfer means adapted to move the movable towers along longitudinal tracks of the apparatus itself.

### Detailed description of a preferred embodiment

With reference to the set of drawings, reference number 1 overall indicates the apparatus for unwinding cables on seabeds, object of the present invention.

The present apparatus 1 is intended to be advantageously employed in offshore work sites for laying cables on the seabed, e.g. of seas, lakes, water basins.

In particular, the present apparatus 1 is employable for laying cables made of yielded steel, intended to be used for example for injecting compressed air or water into an oil well, or also for laying flexible cables intended for various applications, such as energy transmission cables, data transmission signal cables (e.g. made of optical fiber), flexible tubes and more generally flexible umbilical cords.

The present apparatus 1 is intended to be arranged on a support platform 100 such as a deck of a ship or of a lighter or of a pontoon equipped for operating in an offshore work site. Such support platform 100 is provided with a space 101 vertically extended in a through manner through the support platform itself and through which the cable to be unwound is made to descend into the sea towards the seabeds, as described in detail hereinbelow.

With reference to the enclosed figures, the apparatus 1 comprises two movable towers 2 arranged parallel to and spaced from each other and intended to be arranged on the support platform 100. The two movable towers 2 are advantageously extended according to corresponding vertical extension directions X.

In addition, the apparatus 1 comprises two hubs 3 which are arranged facing each other, are rotatably constrained to the corresponding movable towers 2 and are susceptible of being mechanically engaged with a reel 4 of the cable to be unwound.

In particular, each hub 3 is rotatable around a first rotation axis W1, preferably horizontal and orthogonal to the first extension directions X of the two movable towers 2.

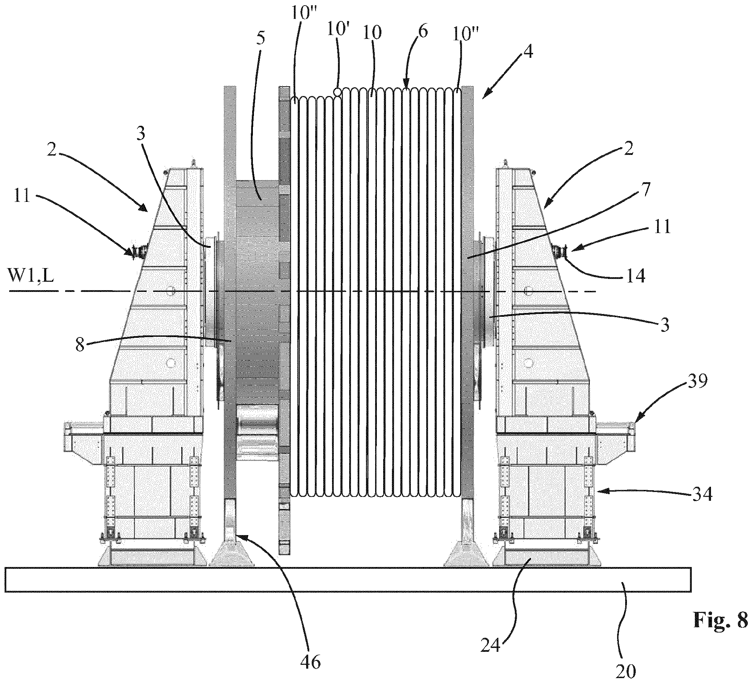

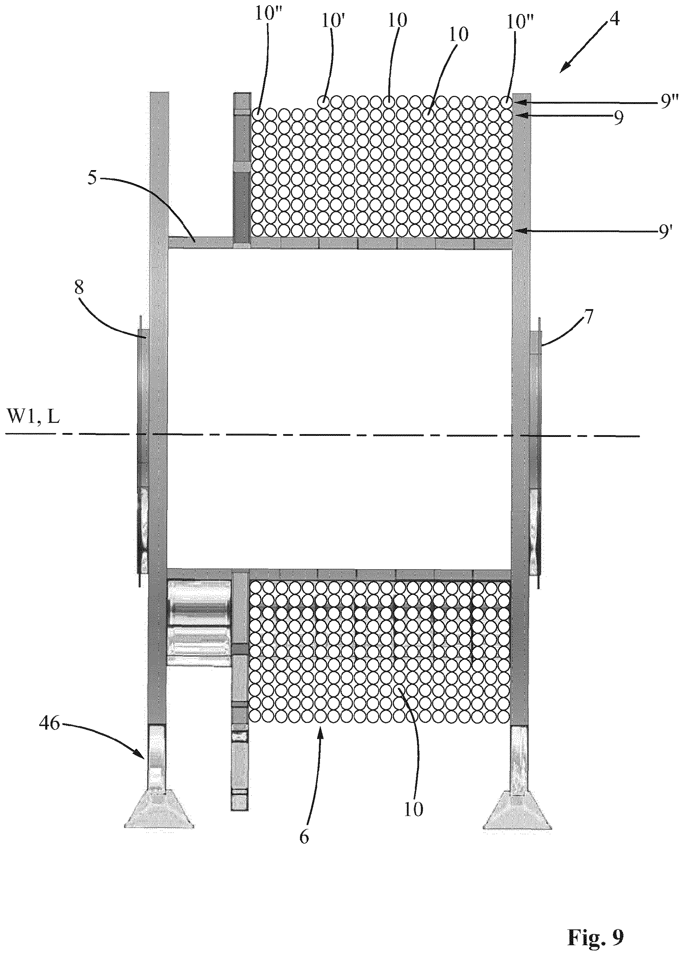

Advantageously, with reference to the embodiment reported in figures 8 and 9, the reel 4 is provided with a drum 5 intended to be arranged coaxially with respect to the first rotation axis W1 and with a cable 6 wound around the drum 5 itself.

Preferably, the drum 5 of the reel 4 (made for example of steel) has substantially cylindrical form and is extended according to a (preferably horizontal) longitudinal axis L thereof between a first end 7 and a second end 8, which are intended to be engaged with the corresponding hubs 3 of the apparatus 1. In particular, the cable 6 is constituted by an elongated element intended to be laid offshore and having a diameter (or more generally a width) comprised for example between 8 and 25 cm and a weight comprised for example between 20 and 50 kg per linear meter.

Still with reference to the embodiments illustrated in figures 8 and 9, the cable 6 of the reel 4 is wound around the drum 5, forming at least one row 9 of coils 10 arranged side-by-side each other along the first rotation axis W1 and comprising a terminal coil 10' from which the cable 6 is susceptible of being unwound from the drum 5.

More in detail, the coils 10 of each row 9 are arranged (in succession) between two end coils 10" preferably arranged in proximity to the corresponding ends 7, 8 of the drum 5.

In accordance with the embodiment illustrated in figures 8 and 9, the cable 6 is wound around the drum 5 of the reel 4, forming multiple aforesaid rows 9 of coils 10 arranged on top of each other. More in detail, the rows 9 of coils 10 are arranged wound on each other, starting from an innermost row 9', wound around the external surface of the drum 5, to an outermost row 9" from which the cable 6 is susceptible of being unwound at the aforesaid terminal coil 10'.

The apparatus 1 according to the invention comprises movement means 11 mechanically connected to the hubs 3 and adapted to rotate the latter around the first rotation axis W1 in order to drive the reel 4 to rotate around the first rotation axis W1 itself, so as to at least unwind the cable 6 from the drum 5 at the terminal coil 10'.

In particular, following the aforesaid rotation movement, the coils 10 of the outermost row 9" are unwound one after the other starting from the terminal coil 10'. When the terminal coil 10' has been completely unwound from the drum 5, the next coil 10 of the outermost row 9" is unwound, which therefore becomes the new terminal coil 10'. In this manner, the cable 6 being unwound is moved along the first rotation axis W from one end of the ends 7, 8 of the drum 5 of the reel 4 to the other, being brought to the terminal coil 10' which is unwound from the drum 5 itself.

When all the coils 10 of the outermost row 9" have been unwound, the underlying row 9 is unwound (starting from one of the coils of end 10" up to the other coil of end 10"), until the innermost row 9' of coils 10 of the reel 4 has been unwound.

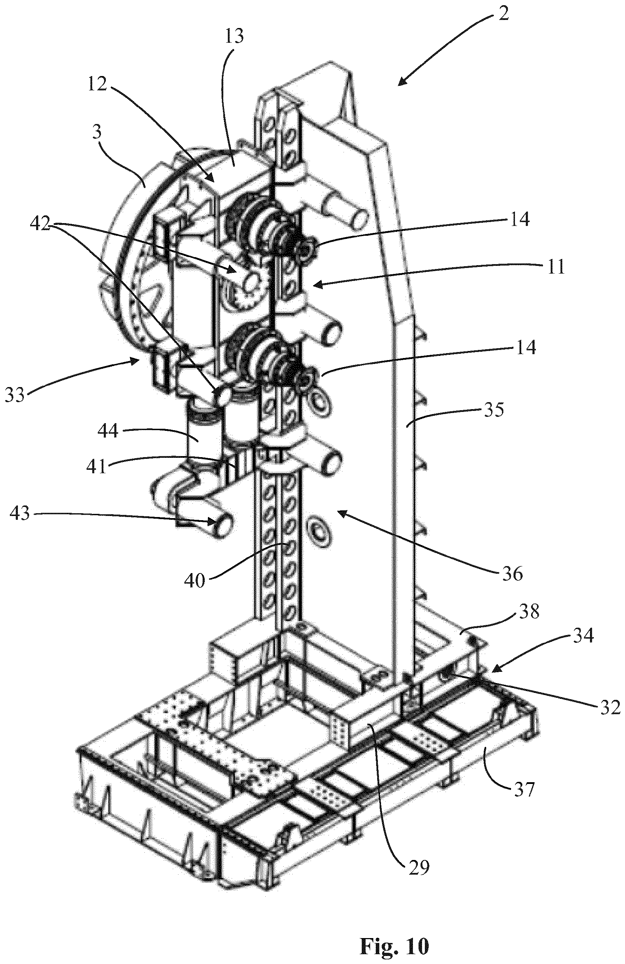

Advantageously, with reference to figure 10, the movement means 11 of the apparatus 1 comprise two hub-holder groups 12, each of which mounted on the corresponding movable tower 2 and in turn carrying the corresponding hub 3 rotatably mounted thereon.

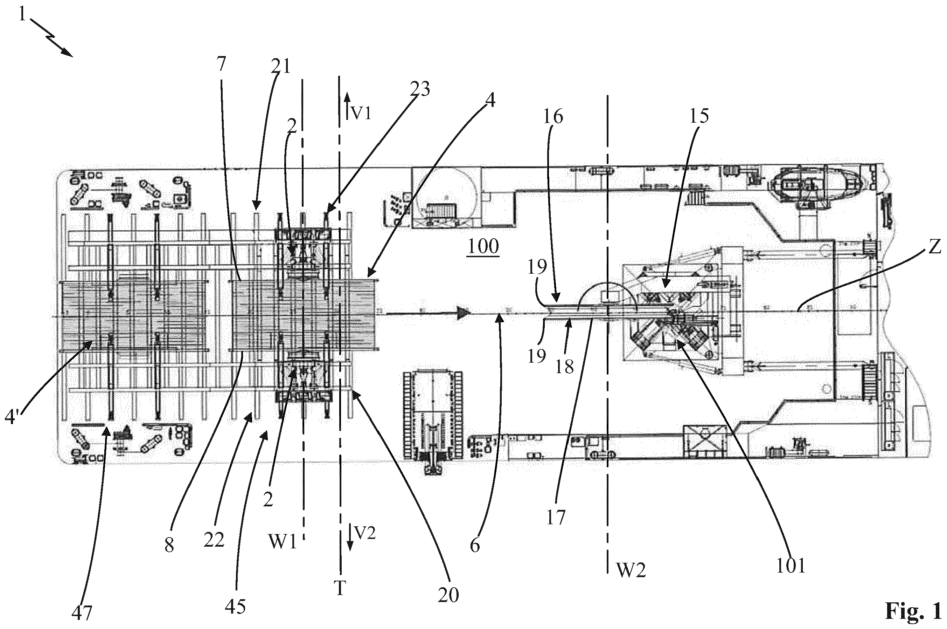

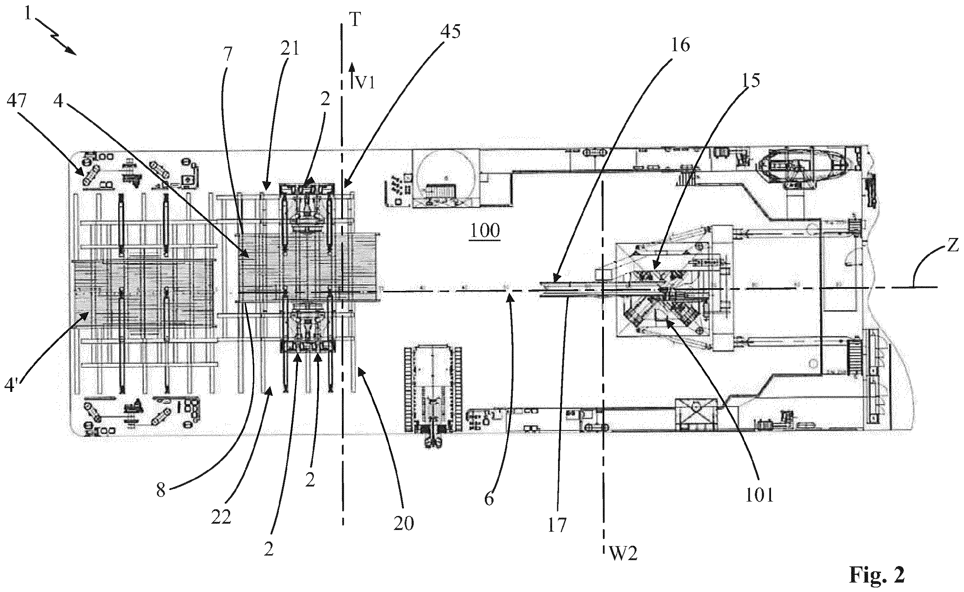

Advantageously, each hub-holder group 12 comprises a support body 13, preferably metallic with box-like form, for example with parallelepiped form, which rotatably carries, mounted thereon, the corresponding hub 3 in particular having the shape of a cylindrical body peripherally provided with notches adapted to be engaged in corresponding teeth made on the internal profile of a connection flange (of type *per se* known to the man skilled in the art) fixed to the corresponding end 7, 8 of the drum 5 of the reel 4, in order to transmit thereto the rotation motion for unwinding the cable 6. On the support body 13 of each hub-holder group 12, at least one motor 14 (and preferably two motors 14) is respectively mounted, for example of electric or oil-hydraulic type, and such motor 14 is mechanically connected to the hub 3 in order to rotate the latter together with the reel 4. According to the invention, with reference to the embodiments of figures 1 and 2, the apparatus 1 comprises a laying tower 15 intended to be fixed on the support platform 100 and transmission means 16, which are mounted on the laying tower 15 and are arranged in particular in front of two movable towers 2.

More in detail, the transmission means 16 are arranged to intercept an unwinding direction Z orthogonal to the first rotation axis W1 of the hubs 3 and passing between the movable towers 2.

The transmission means 16 are susceptible of receiving, in engagement, a section of the cable 6 unwound from the drum 5 of the reel 4 and for transmitting such section of the cable 6 downward in order to make the latter enter into the space 101 of the support platform 100, so as to make the cable 6 itself descend into the sea towards the seabeds.

Advantageously, the laying tower 15, in particular obtained by means of metallic structures, is vertically extended between a base thereof, intended to be fixed on the support platform 100 at the space 101, and a top thereof at which the transmission means 16 are mounted.

With reference to the embodiment illustrated in figures 1 and 2, the transmission means 16 comprise a transmission pulley 17 mounted at the top of the laying tower 15, arranged aligned with the unwinding direction Z and rotatably around a second rotation axis W2 parallel to the first rotation axis W1 of the hubs 3 and preferably horizontal.

In operation, the transmission pulley 17 is adapted to receive, abuttingly on the upper part, the unwound cable 6 coming from the reel 4 and is drivable to rotate around the second rotation axis W2 thereof in order to guide the cable 6 towards the space 101 of the support platform 100. More in detail, the cable 6 at the transmission pulley 17 bends downward, following the curvature of the transmission pulley 17 itself so as to descend towards the space 101.

In particular, the transmission pulley 17 is perimetrically provided with an annular seat 18 (delimited between two projecting side walls 19) within which the section of cable 6 is susceptible of being inserted, such section lying on the transmission pulley 17 itself, in a manner so as to guide the movement of the cable 6 around the second rotation axis W2 of the transmission pulley 17.

The apparatus 1 also comprises tensioning means, mounted on the laying tower 15, operating on the cable 6 in order to keep it constantly taut during the unwinding of the cable 6 itself. Such tensioning means are of type *per se* known to the man skilled in the art and therefore will not be described in detail hereinbelow.

In accordance with the idea underlying the present invention, the apparatus 1 comprises a transverse track 20, which is intended to be arranged on the support platform 100 and carries, slidably constrained thereto, the movable towers 2.

More in detail, the transverse track 20 is extended, between a first side thereof of end 21 and a second side thereof of end 22, according to a moving direction T parallel to the first rotation axis W1 of the hubs 3 and preferably rectilinear and horizontal.

Advantageously, the reel 4 is intended to be engaged between the two movable towers 2 arranged with the first and the second end 7, 8 of the drum 5 respectively directed towards the first and the second end side 21, 22 of the transverse track 20.

The apparatus 1 also comprises moving means 23 mechanically connected to the movable towers 2 and adapted to move the latter along the transverse track 20 according to the moving direction T.

In particular, the moving means 23 are arranged for simultaneously moving the two movable towers 2 in a same direction as the aforesaid moving direction T in order to maintain the terminal coil 10' of the reel 4 aligned with the transmission means 16 (according to the unwinding direction Z) during the unwinding of the cable 6 from the reel 4 itself

More in detail, the moving means 23 are arranged for moving the two movable towers to selectively slide together in a first direction V1 of the moving direction T (in order to move the movable towers 2 towards the first end side 21 of the transverse track 20) or in a second direction V2 of the moving direction T (in order to move the movable towers 2 towards the second end side 22 of the transverse track 20).

According to the invention, the apparatus 1 comprises position identification means (not illustrated in the enclosed figures) arranged for determining a position parameter indicative of the position, along the first rotation axis W1, of the terminal coil 10' of the cable 6 of the reel 4, and control means (also not illustrated in the enclosed figures) operatively connected to the position identification means and to the moving means 23 and arranged for commanding, as a function of the aforesaid position parameter, the moving means 23 to move the movable towers 2 along the moving direction T in order to maintain the terminal coil 10' of the reel 4 substantially aligned with the aforesaid unwinding direction Z. In particular, by "substantially aligned" it is intended that the cable 6, at the terminal coil 10', is arranged within a deviation interval (parallel to the first rotation axis W1) centered on the unwinding direction Z and extended from both sides of the unwinding direction Z itself for a length equal to about three times the diameter of the cable 6 or, preferably, about equal to the diameter of the cable 6 itself. The aforesaid characteristics of the present invention allow, during the operation of the apparatus 1, maintaining the section of cable 6, which is unwound from the reel 4 and which is extended between the reel 4 itself and the transmission means 16, substantially aligned with the unwinding direction Z. This advantageously allows maintaining the terminal coil 10' of the reel 4 parallel to the other coils 10, preventing the terminal coil 10' from overlapping on the adjacent coils 10 and hence avoiding entanglements of the cable 6 that could cause jamming and damage of the cable 6 itself, described above in the discussion of apparatuses of known type.

In addition, by maintaining the section of cable 6 between the reel 4 and the transmission means 16 substantially aligned with the unwinding direction Z, the cable 6 is substantially parallel to the annular seat 18 of the transmission pulley 17, preventing the cable 6 itself from being damaged by rubbing against the edges of the projecting side walls 19 of the transmission pulley 17.

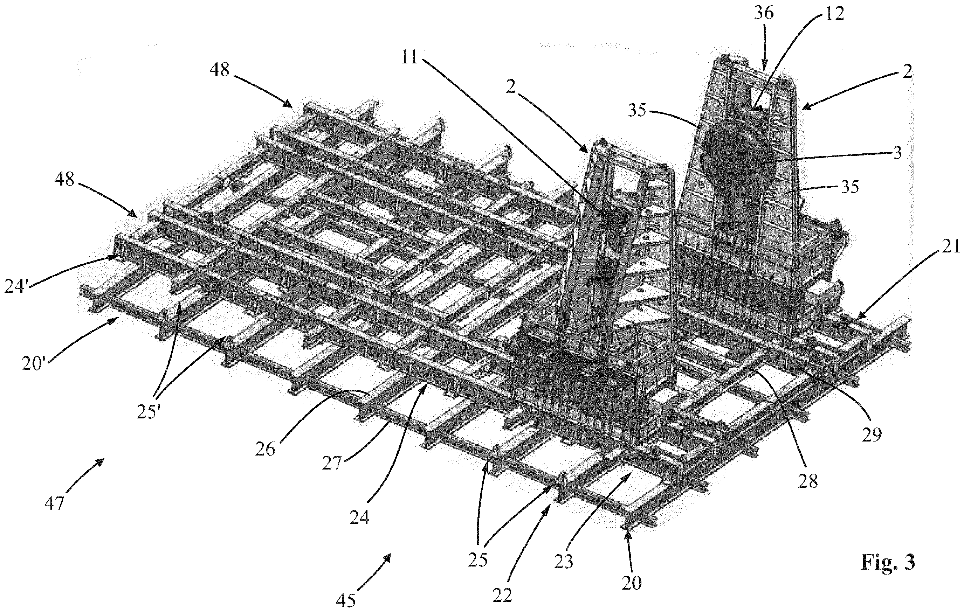

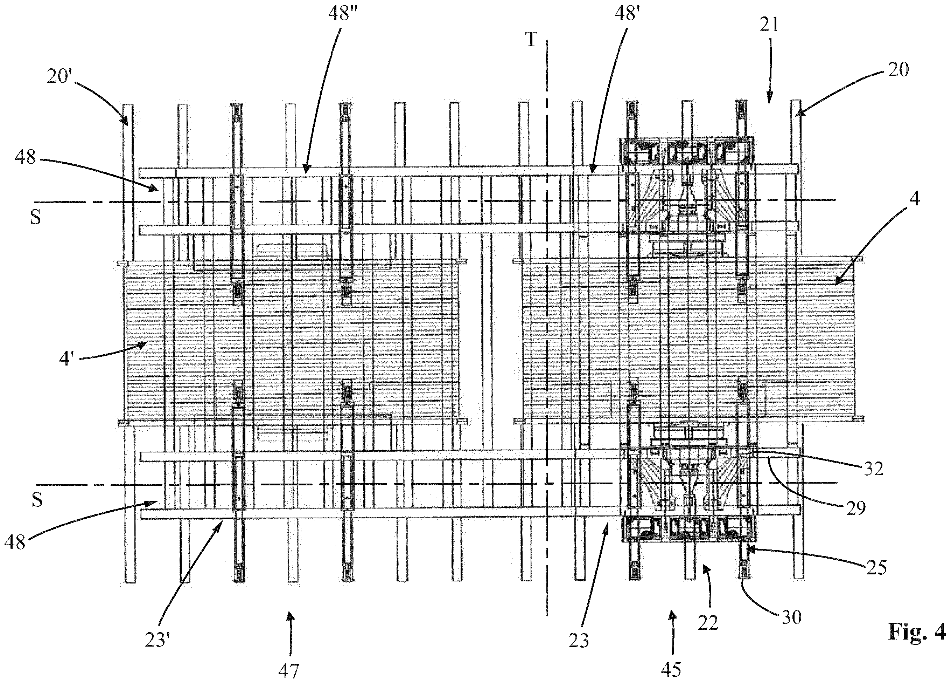

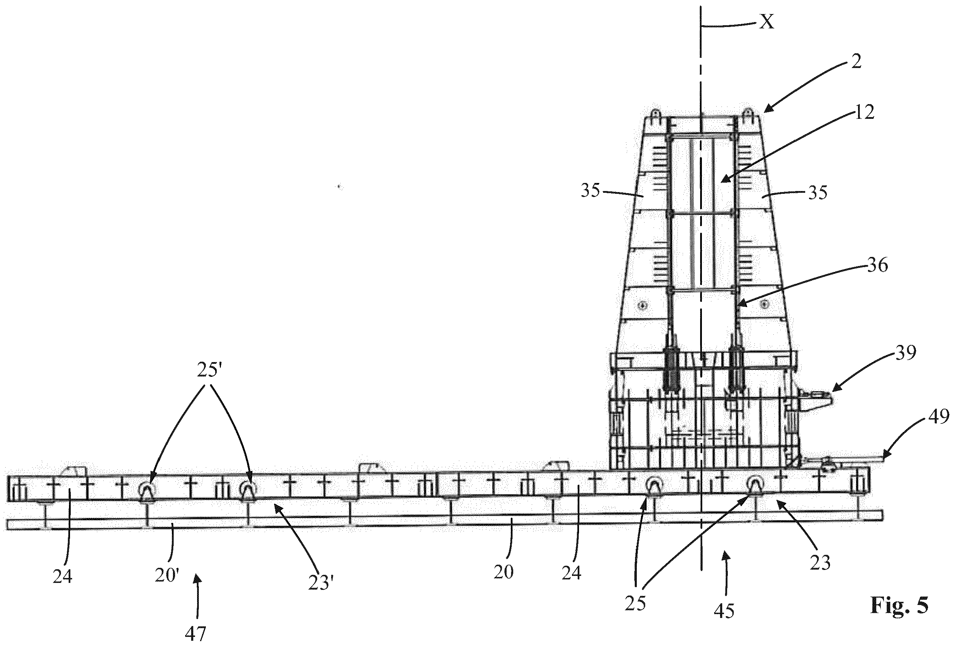

Advantageously, in accordance with the embodiment illustrated in figures 3-6, the moving means 23 (adapted to move the movable towers 2 along the transverse track 20) comprise a movable platform 24 which is slidably mounted on the transverse track 20 and carries the movable towers 2 mounted in abutment thereon, and at least one actuator device 25 mechanically connected to the movable platform 24 and arranged for moving the latter to slide along the transverse track 20.

Advantageously, the transverse track 20 comprises a first metallic framework, which is in particular provided with multiple first longitudinal bars 26 parallel to the moving direction T of the transverse track 20 itself and preferably connected together by one or more first transverse bars 27. Advantageously, the movable platform 24 comprises a second metallic framework in particular provided with second longitudinal bars 28 parallel to the moving direction T of the transverse track 20 and preferably connected together by second transverse bars 29.

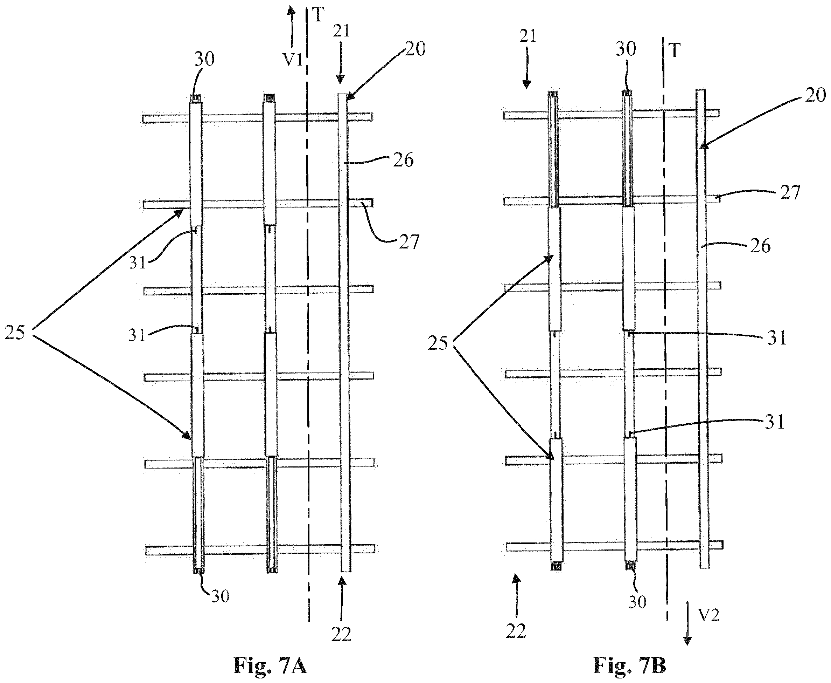

Preferably, in accordance with the embodiment illustrated in the enclosed figures, the moving means 23 comprise multiple aforesaid actuator devices 25 (e.g. four), of which in particular at least one of such actuator devices 25 (e.g. two) is placed at the first end side 21 of the transverse track 20, and at least another of such actuator devices 25 (e.g. two) is placed at the second end side 22 of the transverse track 20 itself (in accordance with the embodiments illustrated in particular in figures 7A and 7B).

Advantageously, each actuator device 25 of the moving means 23 is of linear type and is drivable to be moved in extension and retraction according to a direction parallel to the moving direction T of the transverse track 20.

In particular, each actuator device 25 comprises a first hydraulic cylinder. The control means of the apparatus 1 comprise an oil-hydraulic control unit operatively connected to each hydraulic cylinder in order to control the operation thereof.

Preferably, each actuator device 25 comprises a first end 30 constrained to the transverse track 20 preferably at the corresponding end side 21, 22 of such track, and a second end 31 constrained to the movable platform 24.

In particular, each actuator device 25 has an operating travel of at least one meter (e.g. of about three meters) so to be able to move the movable towers 2 from end side 21, 22 of the transverse track 20 to the other.

Advantageously, each actuator device 25 is at least partially inserted in at least one corresponding passage 32 made in the thickness of the movable platform 24. In particular, each actuator device 25 is inserted in the corresponding passage 32 obtained by means of a through hole made in the corresponding second transverse bar 29 of the movable platform 24.

Advantageously, the control means of the apparatus 1 comprise at least one electronic control unit, which in particular is provided with a PLC and is preferably connected to the aforesaid oil-hydraulic control unit in order to control the operation of the first hydraulic cylinders of the actuator devices 25. Advantageously, the electronic control unit is provided with a control panel by means of which an operator can set operating parameters necessary for the operation of the apparatus 1, such as the diameter and the length of the drum 5 of the reel 4, the diameter of the cable 6, the number of rows 9 of coils 10 of the reel 4, the initial position of the terminal coil 10' of the reel 4, the unwinding speed of the cable 6.

The aforesaid operating parameters allow the position identification means to determine, instant by instant during the rotation of the reel 4, the position of the current terminal coil 10' along the first rotation axis W1 of the hubs 3.

Advantageously, the aforesaid position identification means comprise an electronic module, for example integrated with the electronic control unit of the control means of the apparatus 1.

Advantageously, the apparatus 1 comprises detection means (not illustrated in the enclosed figures) arranged for measuring the rotation speed of the reel 4 around the first rotation axis W1 and operatively connected to the control means in order to send to the latter measurements of such rotation speed.

The control means are arranged for moving the movable towers 2 along the transverse track 20 with overall linear movement speed proportional to the rotation speed of the reel 4, as a function of the aforesaid measurements received from the detection means.

In particular, the movement means are arranged for commanding the hubs 3 to rotate in a manner such that the linear unwinding speed of the cable 6 (corresponding in substance with the speed with which the cable 6 is lowered towards the seabeds) is substantially constant, e.g. with value between 2 and 10 centimeters per minute.

Since the more external rows 9 of coils 10 of the reel 4 have diameter greater than the more internal rows 9, in order to maintain constant the unwinding speed of the cable 6, the movement means 11 are commanded by the control means in order to rotate the hubs 3 (and hence the reel 4) with angular speed that increases when passing from the unwinding of a more external row 9 of coils 10 to the subsequent more internal row 9 of coils 10. Therefore, the more internal rows 9 of coils 10 are unwound with greater angular speed than the more external rows 9 and, hence, when the more internal rows 9 are unwound, the cable 6 is moved from one of the ends 7, 8 of the drum 5 of the reel 4 to the other (along the first rotation axis W1) with greater speed than when the more external rows 9 are unwound.

The detection means measure the rotation speed of the reel 4 by sending corresponding measurement parameters to the control means, which, following variations of the angular speed of the reel 4, command corresponding variations of the movement of the movable towers 2 along the transverse track 20.

In substance, when the more internal rows 9 of coils 10 are unwound, the movable towers 2 are commanded to be moved on the transverse track 20 with overall linear speed that is greater than when more external rows 9 of coils 10 are unwound.

Advantageously, the detection means comprise at least one angular position transducer operatively associated with at least one of the hubs 3 of the apparatus 1.

Preferably, the angular position transducer is operatively connected to at least one of the motors 14 of at least one of the hub-holder groups 12, in order to measure the angular speed of the output shaft of the motor 14; from such angular speed, the rotation speed of the corresponding hub 3 is obtained along with the rotation speed of the reel 4.

In particular, the detection means comprise multiple aforesaid angular position transducers, each of which applied to the corresponding motor 14 of the hub-holder groups 12.

Advantageously, each angular position transducer comprises an encoder, preferably of absolute type, connected to the corresponding motor 14.

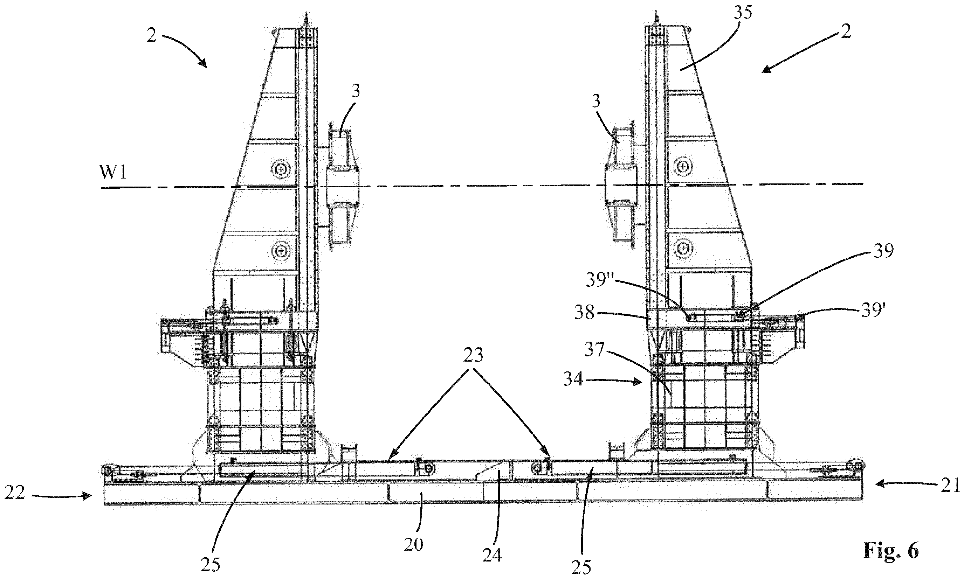

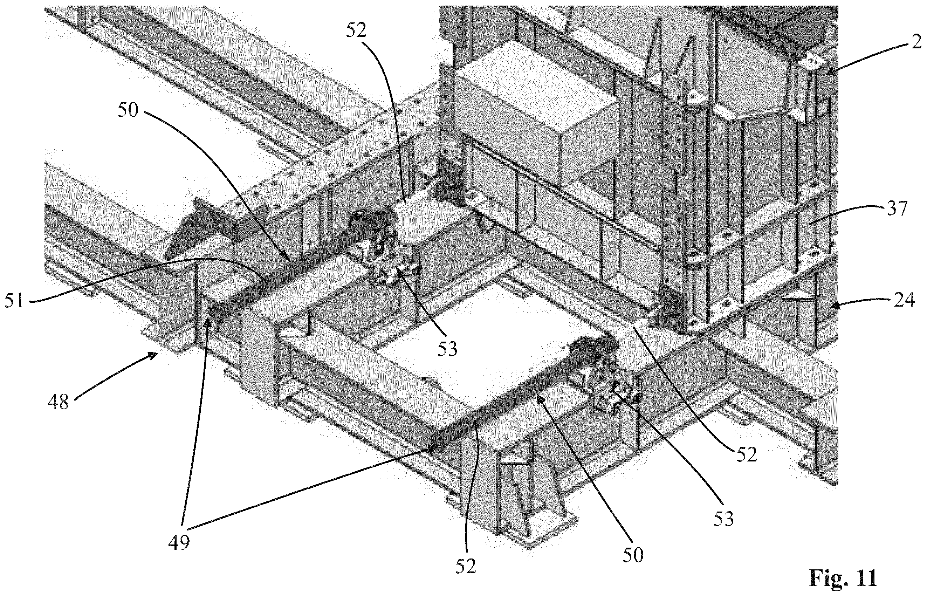

In accordance with the embodiment illustrated in the enclosed figures 6, 8, 10 and 11, each movable tower 2 comprises a base 34 advantageously abutted against the movable platform 24 and two columns 35, which are arranged in abutment against such base 34, are positioned parallel to and spaced from each other and together define a guide seat 36 in which the corresponding hub-holder group 12 is inserted.

Preferably, the base 34 of each movable tower 2 comprises a base 37 arranged in abutment against the movable platform 24, and a base block 38 slidably abutted above the base 37 and carrying the two corresponding columns 35 fixed thereto.

Advantageously, the apparatus 1 comprises connection actuators 39 mechanically connected to the corresponding movable towers 2 and arranged for moving the latter mutually close or away (according to a direction parallel to the first rotation axis W1 of the hubs 3), respectively in order to bring the hubs 3 to engage or disengage the corresponding ends 7, 8 of the drum 5 of the reel 4.

Preferably, the aforesaid connection actuators 39, in particular obtained with second hydraulic cylinders, are advantageously arranged parallel to the first rotation axis W of the hubs 3 and operate on the base block 38 of the base 34 in order to integrally move the columns 35 and the hub-holder group 12, so as to move the corresponding hub 3 to engage or disengage the drum 5 of the reel 4.

In particular, each connection actuator 39 comprises a reaction end 39' engaged with the base 37 and an action end 39" engaged with the base block 38, and it is drivable in extension and retraction for moving the base block 38 itself.

Advantageously, the apparatus 1 comprises a movement system 33 arranged for vertically moving each hub 3 along the corresponding movable tower 2, in particular in order to align the hub 3 with the drum 5 of the reel 4 so as to engage the hub 3 with the reel 4 itself and for lifting and lowering the latter.

In particular, with reference to the embodiment illustrated in figure 10, the movement system 33 comprises, for each hub-holder group 3: multiple anchorage elements 40 made on the columns 35 of the corresponding movable tower 2, a reaction bar 41 arranged in the guide seat 36 of the corresponding movable tower 2, first locking devices 42 mounted on the hub-holder group 12, second locking devices 43 mounted on the reaction bar 41, and at least one movement actuator 44 placed to connect between the hub-holder group 12 and the reaction bar 41, as described in detail in the Italian patent application No. PD2012A000374 from page 10 line 1 to page 16 line 20.

Advantageously, the apparatus 1 comprises a first station 45 provided with a first abutment seat 46 in which the reel 4 is intended to be arranged. Preferably, the first abutment seat 46 comprises a first metal work support saddle against which the reel 4 is intended to be abutted.

At such first station 45, the transverse track 20 and the moving means 23 of the apparatus 1 are arranged.

Advantageously, in accordance with the particular embodiment illustrated in figures 1-5, the apparatus 1 comprises a second station 47 provided with a further abutment seat (not illustrated in the enclosed figures) in which a further reel 4' is intended to be arranged.

In particular, the apparatus 1 comprises, at such second station 47, a further transverse track 20' and further moving means 23' preferably having the same above-described characteristics relative to the transverse track 20 and to the moving means 23 arranged at the first station 45.

In particular, the further moving means 23' comprise a further movable platform 24' slidably mounted on the aforesaid further transverse track 20' and at least one further actuator device 25' mechanically connected to the further movable platform 24' and arranged for moving such further movable platform 24' along the further transverse track 20'.

Advantageously, the present apparatus 1 comprises two longitudinal tracks 48, which are arranged parallel to each other and are extended between the first station 45 and the second station 47. The corresponding movable tower 2 is slidably arranged on each of such longitudinal tracks 48 in order to allow the movement thereof between the first station 45 and the second station 47.

For such purpose, the apparatus 1 comprises transfer means 49 (described in detail hereinbelow), which are mechanically connected to the movable towers 2 and are arranged for moving the latter along the corresponding longitudinal tracks 48 between the two stations 45, 47.

Advantageously, the longitudinal tracks 48 are extended parallel to each other according to corresponding longitudinal directions S, preferably rectilinear.

In particular, each longitudinal track 48 comprises at least two corresponding longitudinal members connected together by multiple corresponding reinforcement crosspieces.

Advantageously, the two longitudinal tracks are made on the movable platforms 24, 24' of the moving means 23, 23'.

Preferably, each longitudinal track 48 comprises a first section 48' made on the movable platform 24 arranged in the first station 45 and a second section 48" made on the further movable platform 24' arranged in the second station 47.

During the movement of the movable towers 2 between the first station 45 and the second station 47, the moving means 23, 23' arrange the corresponding movable platforms 24, 24' in a manner such to position the first section 48' of each longitudinal track 48 aligned with the corresponding second section 48".

Advantageously, with reference to the embodiment of figure 10, the transfer means 49 (arranged for moving the corresponding movable tower 2 along the corresponding longitudinal track 48) advantageously comprise one or more displacement actuators 50, preferably of linear type, obtained in particular by means of third hydraulic cylinders.

In particular, each displacement actuator 50 is provided with two elongated components 51, 52 movable in mutual extension and retraction.

Such elongated components 51, 52 comprise a reaction component 51 constrained to the corresponding longitudinal track 48 and an action component 52 constrained to the movable tower 2, and in particular to the base 37 of the movable tower 2 itself.

Of course, without departing from the protective scope of the present invention and in an entirely equivalent manner, the reaction component 51 can be constrained to the movable tower 2 and the action component 52 can be constrained to the corresponding longitudinal track 48.

Preferably, the reaction component 51 comprises a hollow jacket and the action component 52 comprises a piston inserted in the aforesaid hollow jacket.

Preferably, the reaction component 51 is removably constrained to the longitudinal track 48 by means of a coupling mechanism 53, which is fixed to the aforesaid reaction component 51 and is removably engaged with the corresponding longitudinal track 48, e.g. by means of pins constrainable to corresponding seats made in the longitudinal track 48 itself.

In operation, in order to move each movable tower 2 along the corresponding longitudinal track 48, the displacement actuator 50 is driven to operate according to the following operating steps, assuming that such displacement actuator 50 operates in traction on the movable tower 2 and starting from a configuration in which the displacement actuator 50 is retracted and the coupling mechanism 53 is constrained to the longitudinal track 48:
- releasing the coupling mechanism 53 from longitudinal track 48;
- driving the displacement actuator 50 in extension, in a manner such to move the reaction component 51 along the longitudinal track 48 away from the movable tower 2;
- once again constraining the coupling mechanism 53 to the longitudinal track 48;
- driving the displacement actuator 50 in retraction, in a manner such to draw the movable tower 2 close to the reaction component 51 by advancing the movable tower 2 itself along the longitudinal track 48.

The above-described operating steps are advantageously repeated until the movable tower 2 is brought into the desired position along the longitudinal track 48 (for example at the first station 45 or at the second station 47 of the apparatus 1).

In accordance with an embodiment not illustrated in the enclosed figures, the apparatus 1 comprises only one station at which the transverse track 20 and the moving means 23 are arranged and in which the reel 4 is intended to be arranged, without arranging other stations with further reels.

One object of the present invention is also constituted by a method for operating an apparatus 1 for unwinding cables on seabeds of the above-described type.

Hereinbelow, for the same of description simplicity, reference will be made to the same nomenclature introduced up to now, even if it must be intended that the present method can also be obtained with apparatuses not provided with all of the above-described characteristics.

Advantageously, the present method provides for a step for setting control means of the apparatus 1, in which an operator, in particular by means of the control panel of the electronic control unit, sets the operating parameters necessary for the operation of the apparatus 1, such as the diameter and the length of the drum 5 of the reel 4, the diameter of the cable 6, the number of rows 9 of coils 10 of the reel 4, the number of coils 10 of each row 9, the initial position of the terminal coil 10' of the reel 4, the unwinding speed of the cable 6.

Advantageously, the present method provides for a step of arranging the reel 4 in the first station 45 abutted against the first abutment seat 46.

In particular, the step of arranging the reel 4 is obtained by means of a crane driven to bring the reel 4 from a dock or from a transport ship to the first abutment seat 46 of the first station 45 of the apparatus 1.

Preferably, in particular if the apparatus 1 comprises multiple stations 45, 47, the aforesaid arranging step provides for arranging the further reel 4' in the second station 47.

Advantageously, before the aforesaid arranging step, the two movable towers 2 are moved away from each other in particular by means of driving the connection actuators 39, in a manner so as to arrange the two movable towers 2 at a distance from each other sufficient for allowing the interposition of the reel 4 between the two movable towers 2 themselves.

The present method preferably provides for a step of aligning the hubs 3 with the reel 4, in which advantageously the hub-holder groups 12 are driven to slide along the guide seat 36 of the corresponding movable tower 2, in particular by means of the actuation of the aforesaid movement system 33, in order to arrange the hubs 3 with the first rotation axis W1 aligned with the longitudinal axis L of the drum 5 of the reel 4.

The present method provides for a step of engaging the hubs 3 with the reel 4, and in such engaging step the hubs 3 are connected to the corresponding ends 7, 8 of the drum 5 of the reel 4 in order to rotatably support the reel 4 itself.

In particular, in the engaging step, the movable towers 2 are driven to be moved close to each other, preferably by means of driving the connection actuators 39, until each hub 3 is brought to be engaged with the corresponding end 7, 8 of the drum 5 of the reel 4.

Advantageously, a step is provided for lifting the reel 4 from the first abutment seat 46 of the first station 45. More in detail, in such lifting step, the hub-holder groups 12 are driven (in particular by means of the movement system 33) to be moved upward along the guide seats 36 of the corresponding movable towers 2 in order to separate the reel 4 from the first abutment seat 46, so as to allow the rotation of the reel 4 itself.

According to the invention, the present method comprises a step of unwinding the cable 6 from the drum 5 of the reel 4, in which the reel 4 is driven by the hubs 3 to rotate around the first rotation axis W1 in order to unwind the coils 10 of the cable 6 in succession from the drum 5.

In particular, in the aforesaid unwinding step, the control means command the movement means 11, and in particular the motors 14 of the hub-holder groups 12, to rotate the hubs 3 so as to rotate the reel 4 in a rotation direction such to unwind the cable 6 from the drum 5 of the reel 4 itself.

In the unwinding step, the cable 6 is unwound from the drum 5 at the terminal coil 10' of the reel 4 and is engaged to the transmission means 16 (and in particular to the transmission pulley 17) in order to be transmitted downward so as to enter into the space 101 of the support platform 100 and then descend towards the seabeds.

In particular, following the aforesaid rotation of the reel 4, the coils 10 of the outermost row 9" are unwound one after the other starting from the terminal coil 10'. When the terminal coil 10' has been completely unwound from the drum 5 of the reel 4, the next coil 10 (of the row 9") is unwound, which therefore becomes the new terminal coil 10'. In this manner, the cable 6 being unwound is moved along the first rotation axis W1 from one of the ends 7, 8 of the drum 5 of the reel 4 to the other, being brought to the current terminal coil 10' which is unwound from the drum 5 itself.

In particular, following the rotation of the reel 4, if the coils 10 of the cable 6 are unwound from the first end 7 to the second end 8 of the drum 5, the cable 6, at the terminal coil 10', is moved from the first end 7 to the second end 8 of the drum 5. However, if the coils 10 of the cable 6 are unwound from the second end 8 to the first end 7 of the drum 5, the cable 6, at the terminal coil 10', is moved from the second end 8 to the first end 7 of the drum 5.

When all the coils 10 of the outermost row 9" have been unwound, the underlying row 9 is unwound (starting from one of the coils of end 10" up to the other coil of end 10"), until the innermost row 9' of coils 10 of the reel 4 is unwound.

In accordance with the idea underlying the present invention, the present method comprises a step of determining the position of the current terminal coil 10' along the first rotation axis W1.

Advantageously, such position is calculated by the electronic module of the identification means of the apparatus 1 on the basis of the operating parameters set in the aforesaid setting step and also preferably based on the measurement of rotation speed of the reel 4 measured by the detection means of the apparatus 1.

According to the invention, the method comprises a step of moving the movable towers 2 in a same direction along the moving direction T as a function of the position of the current terminal coil 10' identified in the aforesaid determining step.

In the moving step, the movable towers 2 are driven to be moved in a manner such to arrange the current terminal coil 10' of the reel 4 substantially aligned with the unwinding direction Z orthogonal to the first rotation axis W1 of the hubs 3, passing between the movable towers 2 and intercepted by the transmission means 16.

More in detail, in the moving step, the movable towers 2 are driven to slide together in the first direction V1 of the moving direction T of the transverse track 20 directed towards the first end side 21 of the transverse track 20 itself, or in the second direction V2 of the moving direction T directed towards the second end side 22 of the transverse track 20.

Therefore, when the movable towers 2 are moved in the aforesaid first direction V1, the movable towers 2 approach the first end side 21 of the transverse track 20, and when the movable towers 2 are moved in the aforesaid second direction V2, the movable towers 2 approach the second end side 22 of the transverse track 20.

In particular, with reference to the embodiment of figure 1, when the current terminal coil 10' of the reel 4 is in a substantially median position between the two ends 7, 8 of the drum 5, the moving means 23 carry the two movable towers 2 (and hence the reel 4) into a position substantially equidistant from the two end sides 21, 22 of the transverse track 20.

With reference to the embodiment of figure 2, when the current terminal coil 10' of the reel 4 approaches one of the two ends 7, 8 of the drum 5, the moving means 23 carry the two movable towers 2 and the reel 4 towards the end side 22, 21 of the transverse track 20 opposite the aforesaid end 7, 8 of the drum 5.

More in detail, following the rotation of the reel 4, if the coils 10 of the cable 6 are unwound from the first end 7 to the second end 8 of the drum 5, the movable towers 2 are driven to be moved in the first direction V1 of the moving direction T, moving close to the first end side 21 of the transverse track 20 (as illustrated in the embodiment of figure 2). If the coils 10 of the cable 6 of the reel 4 are unwound from the second end 8 to the first end 7 of the drum 5, the movable towers 2 are driven to be moved in the second direction V2 of the moving direction T, moving close to the second end side 22 of the transverse track 20.

In particular, the actuator devices 25 of the moving means 23 are movable between two end stop positions, illustrated in the embodiments of figures 7A and 7B, including a first end stop position towards the first end side 21 of the transverse track 20 (as illustrated in the embodiment of figure 7A) and a second end stop position towards the second end side 22 of the transverse track 20 (as illustrated in the embodiment of figure 7B).

Advantageously, with every turn of the reel 4 around the first rotation axis W1 (which corresponds to the complete unwinding of the current terminal coil 10'), the movable towers 2 are moved along the moving direction T by a movement section of length substantially equal to the diameter of the cable 6, in a manner so as to compensate for the movement of the cable 6 from the current terminal coil 10' (just unwound) to the following terminal coil 10' which corresponds to the coil 10 of the row 9 following the aforesaid current terminal coil 10' (just unwound).

Preferably, the movable towers 2 are driven to be moved along the moving direction T with overall linear speed proportional to the rotation speed of the reel 4 around the first rotation axis W1.

In particular, the rotation speed of the reel 4 is obtained by means of the aforesaid detection means (preferably comprising one or more aforesaid angular position transducers), which send to the electronic control unit of the apparatus 1 signals relative to the detected rotation speed of the reel 4 itself. The electronic control unit, following the reception of the aforesaid measurement signals by the detection means, commands the movement of the movable towers 2 along the transverse track 20 with overall linear speed proportional to the rotation speed of the reel 4, with a proportionality factor determined as a function, in particular, of the size of the reel 4 and of the cable 6. Advantageously, the movable towers 2 are driven to be moved along the moving direction T with an intermittent movement comprising first time intervals, in which the movable towers 2 are moved a specific travel section, and second time intervals alternated with the first intervals; in such second intervals, the movable towers 2 are stopped with respect to the moving direction T. Such intermittent movement advantageously allows controlling, in a more reliable manner, the extension and retraction movement of the actuator devices 25 which, having large size (e.g. half-meter diameter and weight of about a dozen tons), are subjected to high resistance due to the dynamic friction, making a precise continuous movement thereof difficult.

Preferably, in the case of the aforesaid intermittent movement of the movable towers 2, the overall linear speed of the latter is considered equal to the average speed of the movable towers 2 calculated with respect to each aforesaid first interval (in which the movable towers 2 is moved) and the subsequent second interval (in which the movable towers 2 are stopped).

In accordance with a different embodiment, the movable towers 2 are driven to be moved along the transverse track 20 with a continuous movement.

Advantageously, once the step of unwinding the cable 6 has terminated, the rotation of the reel 4 is stopped by means of in particular stopping the motors 14 of the movement means 11 commanded by the control means of the apparatus 1.

Then, the present method preferably comprises a step of lowering the reel 4 onto the first abutment seat 46 of the first station 45. In the aforesaid lowering step, the hub-holder groups 12 are driven to be moved (in particular by means of the movement system 33) downward along the guide seats 36 of the corresponding movable towers 2, until the reel 4 is abutted against the first abutment seat 46.

A step is also provided for disengaging the hubs 3 from the reel 4, and in such disengaging step the hubs 3 are separated from the drum 5 of the reel 4 itself. In particular, in the disengaging step, the movable towers 2 are driven to be moved away from each other, preferably by means of driving the connection actuators 39, until each hub 3 is separated from the corresponding end 7, 8 of the drum 5 of the reel 4.

The present method then provides for a step of translating the movable towers 2 from the first station 45 to the second station 47 in which the further reel 4' to employed is arranged.

Preferably, before the aforesaid translating step, the moving means 23 are driven for moving the movable platform 24 until the first sections 48' of the longitudinal tracks 48 (made on the movable platform 24 itself) are arranged aligned with the corresponding second sections 48" of the longitudinal tracks 48 (made on the further movable platform 24' of the second station 47).

Advantageously, in the aforesaid translating step, the two movable towers 2 are driven to be moved on the corresponding longitudinal tracks 48 from the first station 45 to the second station 47, in particular by means of driving the transfer means 49.

Once the movable towers 2 have been arranged in the second station 47, the apparatus 1 is driven for unwinding the cable of the further reel 4' in a manner entirely analogous to that provided by the above-described operating steps.

The invention thus conceived therefore achieves the pre-established objects.

## Claims

1. Apparatus (1) for unwinding cables on seabeds, which comprises:
- two movable towers (2) arranged parallel to and spaced from each other and intended to be arranged on a support platform (100);
- two hubs (3), which are arranged facing each other, are rotatably constrained to the corresponding said movable towers (2) around a first rotation axis (W1), and are susceptible of being mechanically engaged with a reel (4), which is provided with a drum (5) intended to be arranged coaxially with respect to said first rotation axis (W1) and with a cable (6) wound around said drum (5) and organized in at least one row (9) of coils (10), such coils (10) arranged side-by-side each other along said first rotation axis (W1) and comprise a terminal coil (10') from which said cable (6) is susceptible of being unwound from said drum (5);
- movement means (11) mechanically connected to said hubs (3) and adapted to rotate said hubs (3) around said first rotation axis (W1) in order to drive said reel (4) to rotate around said first rotation axis (W1) so as to at least unwind said cable (6) from said drum (5) at said terminal coil (10');
- a laying tower (15) intended to be fixed on said support platform (100);
- transmission means (16), which are mounted on said laying tower (15), are arranged to intercept an unwinding direction (Z) substantially orthogonal to the first rotation axis (W1) of said hubs (3) and passing between said movable towers (2), and are susceptible of receiving, in engagement, a section of said cable (6) unwound from said drum (5) and of transmitting the section of said cable (6) downward;
said apparatus (1) being **characterized in that** it also comprises:
- a transverse track (20), which is extended according to a moving direction (T) parallel to said first rotation axis (W1) and carries, slidably constrained thereto, said movable towers (2);
- moving means (23) mechanically connected to said movable towers (2) and adapted to move said movable towers (2) along said transverse track (20) according to said moving direction (T);
- position identification means arranged for determining at least one position parameter indicative of the position, along said first rotation axis (W1), of the terminal coil (10') of the cable (6) of said reel (4);
- control means operatively connected to said position identification means and to said moving means (23) and arranged for commanding, as a function of said position parameter, said moving means (23) to move said movable towers (2) along said moving direction (T), in order to maintain said terminal coil (10') substantially aligned with said unwinding direction (Z);
- detection means arranged for measuring the rotation speed of said reel (4) around said first rotation axis (W1) and operatively connected to said control means in order to send measurements of said rotation speed to said control means;
said control means being arranged for commanding, as a function of said measurements, said movable towers (2) to be moved along said transverse track (20) with an overall linear movement speed proportional to said rotation speed.

2. Apparatus (1) according to claim 1, **characterized in that** said detection means comprise at least one angular position transducer operatively associated with at least one of said hubs (3).

3. Apparatus (1) according to claim 2, **characterized in that** said movement means (11) comprise two hub-holder groups (12), each of which mounted on the corresponding said movable tower (2) and carrying, rotatably mounted thereon, the corresponding said hub (3); each said hub-holder group (12) comprising a support body (13), which carries the corresponding said hub (3) rotatably mounted thereon, and on such support body (13) at least one motor (14) is mounted which is mechanically connected to said hub (3) in order to rotate said hub (3) together with said reel (4);
said angular position transducer being operatively connected to said at least one motor (14) of at least one of said hub-holder groups (12).

4. Apparatus (1) according to any one of the preceding claims, **characterized in that** said movement means (11) are arranged for commanding said hubs (3) to rotate in a manner such that the linear unwinding speed of said cable (6) is substantially constant.

5. Apparatus (1) according to any one of the preceding claims, **characterized in that** said moving means (23) comprise:
- a movable platform (24) which is slidably mounted on said transverse track (20) and carries said movable towers (2) mounted in abutment thereon;
- at least one actuator device (25) mechanically connected to said movable platform (24) and arranged for moving said movable platform (24) along said transverse track (20).

6. Apparatus (1) according to claim 5, **characterized in that** said actuator device (25) is of linear type and is at least partially inserted in a corresponding passage (32) made in the thickness of said movable platform (24).

7. Apparatus (1) according to any one of the preceding claims, **characterized in that** it comprises:
- a first station (45) provided with a first abutment seat (46) in which said reel (4) is intended to be arranged, and at such first station (45) said transverse track (20) and said moving means (23) are arranged;
- at least one second station (47) provided with a further abutment seat in which a further reel (4') is intended to be arranged;
- two longitudinal tracks (48), which are arranged parallel to each other and are extended at least between said first station (45) and said second station (47), the corresponding said movable tower (2) being slidably arranged on each of said longitudinal tracks (48);
- transfer means (49), which are mechanically connected to said movable towers (2) and are arranged for moving said movable towers (2) along the corresponding said longitudinal tracks (48) between said first station (45) and said second station (47).

8. Apparatus (1) according to any one of the preceding claims, **characterized in that** said control means comprise at least one electronic control unit arranged for being set with operating parameters; said position identification means comprising an electronic module arranged for determining, as a function of said operating parameters, instant by instant and during the rotation of said reel (4), the position of said terminal coil (10') along said first rotation axis (W1).

9. Method for operating an apparatus (1) for unwinding cables on seabeds, such apparatus (1) comprising:
- two movable towers (2) arranged parallel to and spaced from each other and arranged on a support platform (100);
- two hubs (3), which are arranged facing each other, are rotatably constrained to the corresponding said movable towers (2) around a first rotation axis (W1), and are mechanically engaged with a reel (4), and such reel (4) is provided with a drum (5) arranged coaxially with respect to said first rotation axis (W1) and with a cable (6) wound around said drum (5) and organized in at least one row (9) of coils (10) that are side-by-side each other along said first rotation axis (W1) and comprising a terminal coil (10');
- a laying tower (15) fixed on said support platform (100);
- transmission means (16) mounted on said laying tower (15);
- a transverse track (20), which is extended according to a moving direction (T) parallel to said first rotation axis (W1) and carries said movable towers (2) slidably constrained thereto;
- moving means (23) mechanically connected to said movable towers (2) and adapted to move said movable towers (2) along said transverse track (20) according to said moving direction (T);
- position identification means arranged for determining at least one position parameter indicative of the position, along said first rotation axis (W1), of the terminal coil (10') of the cable (6) of said reel (4);
- control means operatively connected to said position identification means and to said moving means (23) and arranged for commanding, as a function of said position parameter, said moving means (23) to move said movable towers (2) along said moving direction (T);
- detection means arranged for measuring the rotation speed of said reel (4) around said first rotation axis (W1) and operatively connected to said control means in order to send measurements of said rotation speed to said control means;
said operating method comprising a step of unwinding said cable (6) from the drum (5) of said reel (4), and in such unwinding step said reel (4) is driven by said hubs (3) to rotate around said first rotation axis (W1) in order to unwind in succession said coils (10) from said drum (5), said cable (6) being unwound from said drum (5) at said terminal coil (10') and being engaged with said transmission means (16) in order to be transmitted downward;
said operating method being **characterized in that** it also comprises the following operating steps:
- a step of determining the position of said terminal coil (10') along said first rotation axis (W1); wherein said detection means measure the rotation speed of said reel (4) around said first rotation axis (W1) and send said measurements of said rotation speed to said control means;
- a step of moving said movable towers (2) in a same direction (V1, V2) along said moving direction (T) as a function of the position of said terminal coil (10'), arranging said terminal coil (10') substantially aligned with an unwinding direction (Z) substantially orthogonal to the first rotation axis (W1) of said hubs (3), passing between said movable towers (2) and intercepted by said transmission means (16);
wherein said movable towers (2) are driven, as a function of said measurements, by said control means, to be moved along said moving direction (T) with overall linear movement speed proportional to the rotation speed of said reel (4) around said first rotation axis (W1).

10. Method according to claim 9, **characterized in that**, with every turn of said reel (4) around said first rotation axis (W1), said movable towers (2) are moved along said moving direction (T) by a movement section of length substantially equal to the diameter of said cable (6).

11. Method according to any one of the preceding claim 9 or 10, **characterized in that** said movable towers (2) are driven to be moved along said moving direction (T) with intermittent movement comprising first time intervals, in which said movable towers (2) are moved a specific travel section, and second time intervals alternated with said first time intervals, and in such second time intervals said movable towers (2) are stopped with respect to said moving direction (T).

12. Method according to any one of the preceding claims 9 to 11, **characterized in that**, during said unwinding step, said hubs (3) are driven to rotate in a manner such that the linear unwinding speed of said cable (6) is substantially constant.

13. Method according to any one of the preceding claims 9 to 12, **characterized in that** said hubs (3) rotate with angular speed that increases in passing from the unwinding of one said more external row (9) of coils (10) to a subsequent said more internal row (9) of coils (10).

14. Method according to any one of the preceding claims 9 to 13, **characterized in that** it comprises a step of setting control means of said apparatus (1), and in such setting step an operator sets operating parameters necessary for operating said apparatus (1);
said position of said terminal coil (10') being calculated by an electronic module of position identification means of said apparatus (1) on the basis of said operating parameters set in said setting step.

15. Method according to any one of the preceding claims from 9 to 14, for operating said apparatus (1) which also comprises:
- a first station (45) provided with a first abutment seat (46) in which said reel (4) is arranged, and at such first station (45) said transverse track (20) and said moving means (23) are arranged;
- at least one second station (47) provided with a further abutment seat in which a further reel (4') is arranged;
- two longitudinal tracks (48), which are arranged parallel to each other and extended at least between said first station (45) and said second station (47), the corresponding said movable tower (2) being slidably arranged on each of said longitudinal tracks (48);
said method being **characterized in that** it comprises a step of translating said movable towers (2) between said first station (45) and said second station (47), and in such translation step said movable towers (2) are driven to slide on the corresponding said longitudinal tracks (48) between said first station (45) and said second station (47).

## Patentansprüche

1. Vorrichtung (1) zur Abwicklung von Kabeln auf Meeresböden, die Folgendes umfasst:
- zwei zueinander parallel und im Abstand angeordnete bewegliche Türme (2), die dazu bestimmt sind, auf einer Trägerplattform (100) aufgestellt zu werden;
- zwei Naben (3), die einander gegenüberliegend angeordnet sind, um eine erste Drehachse (W1) drehbar an den entsprechenden genannten beweglichen Türmen (2) angebracht und geeignet sind, sich mechanisch mit einer Spule (4) zu verbinden, die mit einer Trommel (5) ausgestattet ist, die dazu bestimmt ist, koaxial zu der genannten ersten Drehachse (W1) angeordnet zu werden, und mit einem um die genannte Trommel (5) gewickelten Kabel (6), das in mindestens einer Reihe (9) Wicklungen (10) organisiert ist, wobei diese Wicklungen (10) nacheinander entlang der genannten ersten Drehachse (W1) nebeneinanderliegen und eine Endwicklung (10') umfassen, von der aus das genannte Kabel (6) von der genannten Trommel (5) abgewickelt werden kann;
- mechanisch mit den genannten Naben (3) verbundene Bewegungsmittel (11), die geeignet sind, die genannten Naben (3) um die genannte erste Drehachse (W1) in Drehung zu versetzen, um die genannte Spule (4) um die genannte erste Drehachse (W1) in Drehung zu versetzen, um mindestens das genannte Kabel (6) auf der genannten Endwicklung (10') von der genannten Trommel (5) abzuwickeln;
- einen Verankerungsturm (15), der dazu bestimmt ist, auf der genannten Trägerplattform (100) befestigt zu werden;
- Umlenkmittel (16), die auf dem genannten Verankerungsturm (15) montiert sind, eine im Wesentlichen zur ersten Drehachse (W1) rechtwinklige Abwickelrichtung der genannten Naben (3) schneidend angeordnet sind und zwischen den genannten beweglichen Türmen (2) verlaufen und geeignet sind, einen Abschnitt des von der genannten Trommel (5) abgewickelten genannten Kabels (6) aufzunehmen und den Abschnitt des genannten Kabels (6) nach unten umzulenken;
wobei die genannte Vorrichtung (1) **dadurch gekennzeichnet ist, dass** sie außerdem Folgendes umfasst:
- eine Querbahn (20), die entlang einer Verschiebungsrichtung (T) parallel zu der genannten ersten Drehachse (W1) verläuft und die genannten beweglichen Türme (2) verschiebbar befestigt trägt;
- mechanisch mit den genannten beweglichen Türmen (2) verbundene Verschiebungsmittel (23), die geeignet sind, die genannten beweglichen Türme (2) entlang der genannten Querbahn (20) in der genannten Verschiebungsrichtung (T) zu verschieben;
- Mittel zur Identifizierung der Position zur Bestimmung mindestens eines die Position der Endwicklung (10') des Kabels (6) der genannten Spule (4) entlang der genannten ersten Drehachse (W1) angebenden Positionsparameters;
- operativ an die genannten Mittel zur Identifizierung der Position und an die genannten Verschiebungsmittel (23) angeschlossene Steuermittel, die darauf ausgelegt sind, den genannten Verschiebungsmitteln (23) abhängig von dem genannten Positionsparameter zu befehlen, die genannten beweglichen Türme (2) entlang der genannten Verschiebungsrichtung (T) zu verschieben, um die genannte Endwicklung (10') im Wesentlichen mit der genannten Abwicklungsrichtung (Z) ausgerichtet zu halten;
- zum Messen der Drehgeschwindigkeit der genannten Spule (4) um die genannte erste Drehachse (W1) ausgelegte und operativ mit den genannten Steuermitteln verbundene Messmittel, um an die genannten Steuermittel Messungen der genannten Drehgeschwindigkeit zu übertragen;
wobei die genannten Steuermittel darauf ausgelegt sind, den genannten beweglichen Türmen (2) abhängig von den genannten Messungen zu befehlen, sich entlang der genannten Querbahn (20) bei einer insgesamt linearen Verschiebungsgeschwindigkeit proportional zu der genannten Drehgeschwindigkeit zu bewegen.

2. Vorrichtung (1) nach Anspruch 1, **dadurch gekennzeichnet, dass** die genannten Messmittel mindestens einen operativ mit mindestens einer der genannten Naben (3) verbundenen Winkelpositionswandler umfassen.

3. Vorrichtung (1) nach Anspruch 2, **dadurch gekennzeichnet, dass** die genannten Bewegungsmittel (11) zwei Nabenhaltergruppen (12) umfassen, von denen jede auf dem entsprechenden genannten beweglichen Turm (2) montiert ist und die entsprechende genannte Nabe (3) drehbar montiert trägt; wobei jede Nabenhaltergruppe (12) einen Trägerkörper (13) umfasst, der die entsprechende genannte Nabe (3) drehbar montiert trägt und auf diesem Trägerkörper (13) mindestens ein Motor (14) montiert ist, der mechanisch mit der genannten Nabe (3) verbunden ist, um die genannte Nabe (3) zusammen mit der genannten Spule (4) in Drehung zu versetzen;
wobei der genannte Winkelpositionswandler operativ an den genannten mindestens einen Motor (14) mindestens einer der genannten Nabenhaltergruppen (12) angeschlossen ist.

4. Vorrichtung (1) nach irgendeinem der vorangegangenen Ansprüche, **dadurch gekennzeichnet, dass** die genannten Bewegungsmittel (11) darauf ausgelegt sind, den genannten Naben (3) zu befehlen, so zu drehen, dass die lineare Abwickelgeschwindigkeit des genannten Kabels (6) im Wesentlich konstant ist.

5. Vorrichtung (1) nach irgendeinem der vorangegangenen Ansprüche, **dadurch gekennzeichnet, dass** die genannten Verschiebungsmittel (23) Folgendes umfassen:
- eine bewegliche Plattform (24), die verschiebbar auf der genannten Querbahn (20) montiert ist und aufliegend montiert die beiden beweglichen Türme (2) trägt;
- mindestens eine mechanisch an die genannte bewegliche Plattform (24) angeschlossene Stellantriebvorrichtung (25), die darauf ausgelegt ist, die genannte bewegliche Plattform (24) entlang der genannten Querbahn (20) zu bewegen.

6. Vorrichtung (1) nach Anspruch 5, **dadurch gekennzeichnet, dass** die genannte Stellantriebvorrichtung (25) linearen Typs und wenigstens teilweise in einen entsprechenden, in der Stärke der genannten beweglichen Plattform (24) eingerichteten Durchgang (32) eingesetzt ist.

7. Vorrichtung (1) nach irgendeinem der vorangegangenen Ansprüche, **dadurch gekennzeichnet**, Folgendes zu umfassen:
- eine erste Station (45) mit einem ersten Aufnahmesitz (46), in dem die genannte Spule (4) angeordnet werden soll, wobei auf dieser ersten Station (45) die genannte Querbahn (20) und die genannten Verschiebungsmittel (23) angeordnet sind;
- wenigstens eine zweite mit einem weiteren Aufnahmesitz ausgestattete Station (47), in dem eine weitere Spule (4') untergebracht werden soll;
- zwei Längsbahnen (48), die parallel zueinander angeordnet sind und mindestens zwischen der genannten ersten Station (45) und der genannten zweiten Station (47) verlaufen, wobei auf jeder der genannten Längsbahnen (48) der entsprechende genannte erste bewegliche Turm (2) verschiebbar angeordnet ist;
- Übertragungsmittel (49), die mechanisch mit den beiden beweglichen Türmen (2) verbunden und darauf ausgelegt sind, die genannten beweglichen Türme (2) entlang der entsprechenden genannten Längsbahnen (48) zwischen der genannten ersten Station (45) und der genannten zweiten Station (47) zu bewegen.

8. Vorrichtung (1) nach irgendeinem der vorangegangenen Ansprüche, **dadurch gekennzeichnet, dass** die genannten Steuermittel mindestens ein für die Einstellung mit Betriebsparametern ausgelegtes elektronisches Steuergerät umfassen;
wobei diese Mittel zur Identifizierung der Position ein elektronisches Modul umfassen, das darauf ausgelegt ist, abhängig von den genannten Betriebsparametern Moment für Moment während der Drehung der genannten Spule (4) die Position der genannten Endwicklung (10') entlang der genannten ersten Drehachse (W1) festzustellen.

9. Verfahren zum Betrieb einer Vorrichtung (1) zur Abwicklung von Kabeln auf Meeresböden, wobei die Vorrichtung (1) Folgendes umfasst:
- zwei zueinander parallel und im Abstand angeordnete bewegliche Türme (2), die auf einer Trägerplattform (100) aufgestellt sind;
- zwei Naben (3), die einander gegenüberliegend angeordnet sind, um eine erste Drehachse (W1) drehbar an den entsprechenden genannten beweglichen Türmen (2) angebracht und mechanisch mit einer Spule (4) verbunden sind, wobei diese Spule (4) mit einer koaxial zu der genannten ersten Drehachse (W1) angeordneten Trommel (5) und mit einem um die genannte Trommel (5) gewickelten Kabel (6) ausgestattet ist, das in mindestens einer Reihe (9) Wicklungen (10) organisiert ist, die nacheinander entlang der genannten ersten Drehachse (W1) nebeneinander liegen und eine Endwicklung (10') umfassen;
- einen Verankerungsturm (15), der auf der genannten Trägerplattform (100) befestigt ist;
- auf dem genannten Verankerungsturm (15) montierte Umlenkmittel (16);
- eine Querbahn (20), die entlang einer Verschiebungsrichtung (T) parallel zu der genannten ersten Drehachse (W1) verläuft und die genannten beweglichen Türme (2) verschiebbar befestigt trägt;
- mechanisch mit den genannten beweglichen Türmen (2) verbundene Verschiebungsmittel (23), die geeignet sind, die genannten beweglichen Türme (2) entlang der genannten Querbahn (20) in der genannten Verschiebungsrichtung (T) zu verschieben;
- Mittel zur Identifizierung der Position zur Bestimmung mindestens eines die Position der Endwicklung (10') des Kabels (6) der genannten Spule (4) entlang der genannten ersten Drehachse (W1) angebenden Positionsparameters;
- operativ an die genannten Mittel zur Identifizierung der Position und an die genannten Verschiebungsmittel (23) angeschlossene Steuermittel, die darauf ausgelegt sind, den genannten Verschiebungsmitteln (23) abhängig von dem genannten Positionsparameter zu befehlen, die genannten beweglichen Türme (2) entlang der genannten Verschiebungsrichtung (T) zu verschieben;
- zum Messen der Drehgeschwindigkeit der genannten Spule (4) um die genannte erste Drehachse (W1) ausgelegte und operativ mit den genannten Steuermitteln verbundene Messmittel, um an die genannten Steuermittel Messungen der genannten Drehgeschwindigkeit zu übertragen;
wobei das genannte Verfahren zum Betrieb einen Schritt der Abwicklung des genannten Kabels (6) von der Trommel (5) der genannten Spule (4) umfasst und bei diesem Schritt der Abwicklung die genannte Rolle (4) von den genannten Naben (3) angetrieben wird, um um die genannte erste Drehachse (W1) zu drehen und nacheinander die genannten Wicklungen (10) von der genannten Trommel (5) abzuwickeln, wobei das genannte Kabel (6) von der genannten Trommel (5) auf der genannten Endwicklung (10') abgewickelt wird und sich mit den genannten Umlenkmitteln verbindet, um nach unten umgelenkt zu werden;
wobei das genannte Verfahren zum Betrieb **dadurch gekennzeichnet** ist, außerdem die folgenden operativen Schritte zu umfassen:
- einen Schritt zur Feststellung der Position der genannten Endwicklung (10') entlang der genannten ersten Drehachse (W1); bei dem die genannten Messmittel die Drehgeschwindigkeit der genannten Spule (4) um die genannte erste Drehachse (W1) messen und an die genannten Steuermittel die genannten Messungen der genannten Drehgeschwindigkeit übertragen;
- einen Schritt der Verschiebung der genannten beweglichen Türme (2) mit derselben Ausrichtung (V1, V2) entlang der genannten Verschiebungsrichtung (T) abhängig von der Position der genannten Endwicklung (10'), indem die genannte Endwicklung (10') im Wesentlichen mit einer Abwicklungsrichtung (Z) ausgerichtet angeordnet wird, die im Wesentlichen rechtwinklig zu der ersten Drehachse (W1) der genannten Naben (3) ist, und zwischen den genannten beweglichen Türmen (2) verläuft und von den genannten Umlenkmitteln (16) erfasst wird;
wobei die genannten beweglichen Türme (2) abhängig von den genannten Steuermitteln angetrieben werden, um sich entlang der genannten Verschiebungsrichtung (T) bei einer insgesamt linearen Verschiebungsgeschwindigkeit zu verschieben, die proportional zur Drehgeschwindigkeit der genannten Spule (4) um die genannte erste Drehachse (W1) ist.

10. Verfahren nach Anspruch 9, **dadurch gekennzeichnet, dass** bei jeder Umdrehung der genannten Spule (4) um die genannte erste Drehachse (W1) die genannten beweglichen Türme (2) entlang der genannten Verschiebungsrichtung (T) um einen Verschiebungsabschnitt einer Länge verschoben werden, die im Wesentlichen dem Durchmesser des genannten Kabels (6) entspricht.

11. Verfahren nach Anspruch 9 oder 10, **dadurch gekennzeichnet, dass** die genannten beweglichen Türme (2) angetrieben werden, um entlang der genannten Verschiebungsrichtung (T) mit einer intermittierenden Bewegung verschoben zu werden, die erste Zeitintervalle umfasst, in denen die genannten beweglichen Türme (2) um einen bestimmten Hub verschoben werden, und mit den ersten Zeitintervallen abwechselnde zweite Zeitintervalle, wobei in diesen zweiten Zeitintervallen die genannten beweglichen Türme (2) im Vergleich zu der genannten Verschiebungsrichtung (T) stillstehen.

12. Verfahren nach irgendeinem der vorangegangenen Ansprüche 9 bis 11, **dadurch gekennzeichnet, dass** während des genannten Abwicklungsschritts die genannten Naben (3) so in Drehung versetzt werden, dass die lineare Abwicklungsgeschwindigkeit des genannten Kabels (6) im Wesentlichen konstant ist.

13. Verfahren nach irgendeinem der vorangegangenen Ansprüche 9 bis 12, **dadurch gekennzeichnet, dass** die genannten Naben (3) mit einer Winkelgeschwindigkeit drehen, die sich erhöht, wenn vom Abwickeln einer genannten Reihe (9) Wicklungen (10) weiter außen zu einer nachfolgenden genannten Reihe (9) Wicklungen (10) weiter innen gewechselt wird.

14. Verfahren nach irgendeinem der vorangegangenen Ansprüche 9 bis 13, **dadurch gekennzeichnet, dass** es einen Schritt der Einstellung der Steuermittel der genannten Vorrichtung (1) umfasst, wobei bei diesem Einstellschritt ein Bediener die für den Betrieb der genannten Vorrichtung (1) notwendigen Betriebsparameter eingibt;
wobei die Position der genannten Endwicklung (10') von einem elektronischen Modul von Mitteln zur Identifizierung der Position der genannten Vorrichtung (1) auf Grundlage der während des genannten Einstellschritts eingegebenen genannten Betriebsparameter berechnet wird.

15. Verfahren nach irgendeinem der vorangegangenen Ansprüche 9 bis 14 zum Betrieb der genannten Vorrichtung (1), das außerdem Folgendes umfasst:
- eine erste Station (45) mit einem ersten Aufnahmesitz (46), in dem die genannte Spule (4) angeordnet ist, wobei auf dieser ersten Station (45) die genannte Querbahn (20) und die genannten Verschiebungsmittel (23) angeordnet sind;
- wenigstens eine zweite mit einem weiteren Aufnahmesitz ausgestattete Station (47), in dem eine weitere Spule (4') untergebracht ist;
- zwei Längsbahnen (48), die parallel zueinander angeordnet sind und mindestens zwischen der genannten ersten Station (45) und der genannten zweiten Station (47) verlaufen, wobei auf jeder der genannten Längsbahnen (48) der entsprechende genannte erste bewegliche Turm (2) verschiebbar angeordnet ist;
wobei dieses Verfahren **dadurch gekennzeichnet ist, dass** es einen Schritt des Verschiebens der genannten beweglichen Türme (2) zwischen der genannten ersten Station (45) und der genannten zweiten Station (47) umfasst, wobei bei diesem Schritt des Verschiebens die genannten beweglichen Türme (2) angetrieben werden, um auf den entsprechenden genannten Längsbahnen (48) zwischen der genannten ersten Station (45) und der genannten zweiten Station (47) verschoben zu werden.

## Revendications

1. Appareil (1) de déroulement de câbles sur les fonds marins comprenant :
- deux tours mobiles (2) placées parallèles et écartées entre elles, destinées à être disposées sur une plateforme de support (100) ;
- deux moyeux (3), placés l'un vis à vis de l'autre, sont assujettis de façon tournante auxdites tours mobiles (2) autour d'un premier axe de rotation (W1), et sont susceptibles de s'engager mécaniquement dans une bobine (4), laquelle est dotée d'un tambour (5) destiné à être disposé de manière coaxiale par rapport audit premier axe de rotation (W1) et d'un câble (6) enroulé autour dudit tambour (5) et organisé en au moins une rangée (9) de spires (10) lesdites spires (10) étant accolées l'une à l'autre suivante le long dudit premier axe de rotation (W1) et comprenant une spire terminale (10') à partir de laquelle ledit câble (6) est susceptible d'être déroulé dudit tambour (5) ;
- moyens de mise en mouvement (11) mécaniquement reliés auxdits moyeux (3) et propres à mettre en rotation lesdits moyeux (3) autour dudit premier axe de rotation (W1) pour actionner ladite bobine (4) à tourner autour dudit premier axe de rotation (W1) afin au moins de dérouler ledit câble (6) dudit tambour (5) au niveau de ladite spire terminale (10') ;
- une tour de pose (15) destinée à être fixée sur ladite plateforme de support (100) ;
- moyens de renvoi (16), montés sur ladite tour de pose (15), disposés à interception d'une direction de déroulement (Z) essentiellement orthogonale au premier axe de rotation (W1) desdits moyeux (3), passant entre lesdites tours mobiles (2) et susceptibles de recevoir l'engagement d'une partie dudit câble (6) déroulé dudit tambour (5) et de renvoyer la partie dudit câble (6) vers le bas ;
ledit appareil (1) étant **caractérisé en ce qu'**il comprend en outre :
- une piste transversale (20), laquelle se développe selon une direction de déplacement (T) parallèle audit premier axe de rotation (W1) et porte assujettie de façon coulissante lesdites tours mobiles (2) ;
- moyeux de déplacement (23) mécaniquement raccordés auxdites tours mobiles (2) et propres à déplacer lesdites tours mobiles (2) le long de ladite piste transversale (20) selon ladite direction de déplacement (T) ;
- moyens d'identification de position prévus pour déterminer au moins un paramètre de position indicatif de la position, le long dudit premier axe de rotation (W1), de la spire terminale (10') du câble (6) de ladite bobine (4) ;
- moyens de commande raccordés de façon opérationnelle auxdits moyens d'identification de position et auxdits moyens de déplacement (23) et prévus pour commander, en fonction dudit paramètre de position, auxdits moyens de déplacement (23) de déplacer lesdites tours mobiles (2) le long de ladite direction de déplacement (T), afin de maintenir ladite spire terminale (10') essentiellement alignée sur ladite direction de déroulement (Z) ;
- moyens de détection prévus pour mesurer la vitesse de rotation de ladite bobine (4) autour dudit premier axe de rotation (W1) et raccordés de façon opérationnelle auxdits moyens de commande pour transmettre auxdits moyens de commande les mesures de ladite vitesse de rotation ;
lesdits moyens de commande étant prévus pour commander, en fonction desdites mesures, auxdites tours mobiles (2) de se déplacer le long de ladite piste transversale (20) avec une vitesse de déplacement linéaire totale proportionnelle à ladite vitesse de rotation.

2. Appareil (1) selon la revendication 1, **caractérisé en ce que** lesdits moyens de détection comprennent au moins un transducteur de position angulaire associé de façon opérationnelle à au moins un desdits moyeux (3).

3. Appareil (1) selon la revendication 2, **caractérisé en ce que** lesdits moyens de mise en mouvement (11) comprennent deux groupes porte-moyeu (12), chacun desquels est monté sur ladite tour mobile correspondante (2) et porte, monté de façon tournante, ledit moyeu correspondant (3) ; chacun desdits groupes porte-moyeu (12) comprenant un corps de support (13), lequel porte, monté de façon tournante, ledit moyeu (3) correspondant sur lequel corps de support (13) est monté au moins un moteur (14) lequel est mécaniquement raccordé audit moyeu (3) pour mettre ledit moyeu (3) en rotation avec ladite bobine (4) ; ledit transducteur de position angulaire étant raccordé de façon opérationnelle audit au moins un moteur (14) d'au moins un desdits groupes porte-moyeu (12).

4. Appareil (1) selon l'une quelconque des revendications précédentes, **caractérisé en ce que** lesdits moyens de mise en mouvement (11) sont prévus pour commander aux dits moyeux (3) de tourner de façon à ce que la vitesse linéaire de déroulement dudit câble (6) soit essentiellement constante.

5. Appareil (1) selon l'une quelconque des revendications précédentes, **caractérisé en ce que** lesdits moyens de déplacement (23) comprennent :
- une plateforme mobile (24) laquelle est montée de façon coulissante sur ladite piste transversale (20) et porte, montées en appui, lesdites tours mobiles (2) ;
- au moins un dispositif actionneur (25) mécaniquement raccordé à ladite plateforme mobile (24) et propre à mettre en mouvement ladite plateforme mobile (24) le long de ladite piste transversale (20).

6. Appareil (1) selon la revendication 5, **caractérisé en ce que** ledit dispositif actionneur (25) est de type linéaire et au moins partiellement inséré dans un passage correspondant (32) réalisé dans l'épaisseur de ladite plateforme mobile (24).

7. Appareil (1) selon l'une quelconque des revendications précédentes, **caractérisé en ce qu'**il comprend :
- un premier poste (45) doté d'un premier siège d'appui (46) sur lequel est destinée à être placée ladite bobine (4), au niveau dudit premier poste (45) sont disposés ladite piste transversale (20) et lesdits moyens de déplacement (23) ;
- au moins un deuxième poste (47) doté d'un autre siège d'appui sur lequel est destinée à être placée une autre bobine (4') ;
- deux pistes longitudinales (48), qui sont disposées parallèles entre elles et se développent au moins entre ledit premier poste (45) et ledit deuxième poste (47), sur chacune desdites pistes longitudinales (48) étant disposée de façon coulissante ladite tour mobile (2) correspondante ;
- moyeux de transfert (49) mécaniquement raccordés auxdites tours mobiles (2) et propres à mettre en mouvement lesdites tours mobiles (2) le long desdites pistes longitudinales (48) correspondantes entre ledit premier poste (45) et ledit deuxième poste (47).

8. Appareil (1) selon l'une quelconque des revendications précédentes, **caractérisé en ce que** lesdits moyens de commande comprennent au moins une unité électronique de commande prévue pour être configurée avec des paramètres opérationnels ;
lesdits moyens d'identification de position comprenant un module électronique prévu pour déterminer, en fonction desdits paramètres opérationnels, instant par instant, durant la rotation de ladite bobine (4), la position de ladite spire terminale (10') le long dudit premier axe de rotation (W1).

9. Procédé de fonctionnement d'un appareil (1) de déroulement de câbles sur les fonds marins, l'appareil (1) comprenant :
- deux tours mobiles (2) placées parallèles et écartées entre elles et disposées sur une plateforme de support (100) ;
- deux moyeux (3), placés l'un vis à vis de l'autre, qui sont assujettis de façon tournante auxdites tours mobiles (2) correspondantes, autour d'un premier axe de rotation (W1), et sont mécaniquement engagés dans une bobine (4), laquelle bobine (4) est dotée d'un tambour (5) disposé de manière coaxiale par rapport audit premier axe de rotation (W1) et d'un câble (6) enroulé autour dudit tambour (5) et organisé en au moins une rangée (9) de spires (10) accolées l'une à la suivante le long dudit premier axe de rotation (W1) et comprenant une spire terminale (10') ;
- une tour de pose (15) fixée sur ladite plateforme de support (100) ;
- moyens de renvoi (16) fixés sur ladite tour de pose (15) ;
- une piste transversale (20), laquelle se développe selon une direction de déplacement (T) parallèle audit premier axe de rotation (W1) et porte assujettie de façon coulissante lesdites tours mobiles (2) ;
- moyeux de déplacement (23) mécaniquement raccordés auxdites tours mobiles (2) et propres à déplacer lesdites tours mobiles (2) le long de ladite piste transversale (20) selon ladite direction de déplacement (T) ;
- moyens d'identification de position prévus pour déterminer au moins un paramètre de position indicatif de la position, le long dudit premier axe de rotation (W1), de la spire terminale (10') du câble (6) de ladite bobine (4) ;
- moyens de commande raccordés de façon opérationnelle auxdits moyens d'identification de position et auxdits moyens de déplacement (23) et prévus pour commander, en fonction dudit paramètre de position, auxdits moyens de déplacement (23) de déplacer lesdites tours mobiles (2) le long de ladite direction de déplacement (T) ;
- moyens de détection prévus pour mesurer la vitesse de rotation de ladite bobine (4) autour dudit premier axe de rotation (W1) et raccordés de façon opérationnelle auxdits moyens de commande pour transmettre auxdits moyens de commande les mesures de ladite vitesse de rotation ;
ledit procédé de fonctionnement comprenant une phase de déroulement dudit câble (6) du tambour (5) de ladite bobine (4), phase de déroulement dans laquelle ladite bobine (4) est actionnée par lesdits moyeux (3) à tourner autour dudit premier axe de rotation (W1) pour dérouler en succession lesdites spires (10) dudit tambour (5), ledit câble (6) se déroulant dudit tambour (5) au niveau de ladite spire terminale (10') et s'engageant dans lesdits moyens de renvoi (16) pour être renvoyé vers le bas ;
ledit procédé de fonctionnement étant **caractérisé en ce qu'**il comprend en outre les phases opérationnelles suivantes :
- une phase de détermination de la position de ladite spire terminale (10') le long dudit premier axe de rotation (W1) ; dans laquelle lesdits moyens de détection mesurent la vitesse de rotation de ladite bobine (4) autour dudit premier axe de rotation (W1) et transmettent auxdits moyens de commande lesdites mesures de ladite vitesse de rotation ;
- une phase de déplacement desdites tours mobiles (2) dans un même sens (V1, V2) le long de ladite direction de déplacement (T) en fonction de la position de ladite spire terminale (10'), disposant ladite spire terminale (10') essentiellement alignée sur une direction de déroulement (Z) essentiellement orthogonale au premier axe de rotation (W1) desdits moyeux (3), passant entre lesdites tours mobiles (2) et interceptée par lesdits moyens de renvoi (16) ;
dans laquelle lesdites tours mobiles (2) sont actionnées, en fonction desdites mesures, par lesdits moyens de commande à se déplacer le long de ladite direction de déplacement linéaire totale proportionnelle à la vitesse de rotation de ladite bobine (4) autour dudit premier axe de rotation (W1).

10. Procédé selon la revendication 9, **caractérisé en ce que**, à chaque tour de ladite bobine (4) autour dudit premier axe de rotation (W1), lesdites tours mobiles (2) sont déplacées le long de ladite direction de déplacement (T) d'une portion de déplacement de longueur essentiellement égale au diamètre dudit câble (6).

11. Procédé selon la revendication 9 ou 10, **caractérisé en ce que** lesdites tours mobiles (2) sont actionnées à se déplacer le long de ladite direction de déplacement (T) avec un mouvement intermittent comprenant des premiers intervalles de temps, dans lesquels lesdites tours mobiles (2) sont déplacées d'une portion de course déterminée, et des deuxièmes intervalles de temps qui se succèdent auxdits premiers intervalles de temps et dans ces deuxièmes intervalles de temps lesdites tours mobiles (2) sont arrêtées par rapport à ladite direction de déplacement (T).

12. Procédé selon l'une quelconque des revendications précédentes 9 à 11, **caractérisé en ce que** durant ladite phase de déroulement lesdits moyeux (3) sont actionnés à tourner de façon telle que la vitesse linéaire de déroulement dudit câble (6) soit essentiellement constante.

13. Procédé selon l'une quelconque des revendications précédentes 9 à 12, **caractérisé en ce que** lesdits moyeux (3) tournent à une vitesse angulaire qui augmente lorsqu'on passe du déroulement d'une ladite rangée (9) de spires (10) plus externe à une rangée (9) de spires (10) suivante plus interne.

14. Procédé selon l'une quelconque des revendications précédentes 9 à 13, **caractérisé en ce qu'**il comprend une phase de réglage des moyens de commande dudit appareil (1), dans laquelle phase de réglage un opérateur configure des paramètres opérationnels nécessaires au fonctionnement dudit appareil (1) ; ladite position de ladite spire terminale (10') étant calculée par un module électronique de moyens d'identification de position dudit appareil (1) sur la base desdits paramètres opérationnels configurés dans ladite phase de réglage.

15. Procédé selon l'une quelconque des revendications précédentes 9 à 14, de fonctionnement dudit appareil (1) comprenant en outre :
- un premier poste (45) doté d'un premier siège d'appui (46) sur lequel est placée ladite bobine (4), au niveau dudit premier poste (45) sont disposés ladite piste transversale (20) et lesdits moyens de déplacement (23) ;
- au moins un deuxième poste (47) doté d'un autre siège d'appui sur lequel est placée une autre bobine (4') ;
- deux pistes longitudinales (48), qui sont disposées parallèles entre elles et se développent au moins entre ledit premier poste (45) et ledit deuxième poste (47), sur chacune desdites pistes longitudinales (48) étant disposée de façon coulissante ladite tour mobile (2) correspondante ;
ledit procédé étant **caractérisé en ce qu'**il comprend une phase de translation desdites tours mobiles (2) entre ledit premier poste (45) et ledit deuxième poste (47), dans laquelle phase de translation lesdites tours mobiles (2) sont actionnées à coulisser sur les correspondantes pistes longitudinales (48) entre ledit premier poste (45) et ledit deuxième poste (47).
